Europäisches Patentamt

European Patent Office

Office européen des brevets

(19)

(11) Publication number: **0 188 125**
**B1**

# EUROPEAN PATENT SPECIFICATION

(12)

(45) Date of publication of the patent specification:
23.05.90

(21) Application number: **85309355.7**

(22) Date of filing: **20.12.85**

(51) Int. Cl.⁵: **C08F 6/00, C08F 2/34,**
**C08F 10/00, B01J 8/24**

(54) Closed loop recycle of vent gas in polymerization process.

(30) Priority: **31.12.84 US 687878**

(43) Date of publication of application:
**23.07.86 Bulletin 86/30**

(45) Publication of the grant of the patent:
**23.05.90 Bulletin 90/21**

(84) Designated Contracting States:
**BE DE FR GB IT NL SE**

(56) References cited:
**EP-A- 0 047 077**
**EP-A- 0 089 691**
**US-A- 3 310 882**

(73) Proprietor: **MOBIL OIL CORPORATION, 150 East 42nd
Street, New York New York 10017(US)**

(72) Inventor: **Hagerty, Robert Olds, 328 Horizon Drive,
Edison New Jersey 08817(US)**

(74) Representative: **Cooper, John Anthony et al, Mobil
Court 3 Clements Inn, London WC2A 2EB(GB)**

## Description

This invention relates to a method for polymerizing alpha-olefins. More particularly, the invention relates to an improved method of polymerizing alpha-olefins to produce, preferably, linear low density polyethylene and polypropylene, wherein the loss of monomers experienced in prior art processes is greatly reduced.

Polymers and copolymers of $C_2$-$C_{10}$ olefins, particularly copolymers of ethylene and higher alpha-olefins, have in recent years been produced in gas phase, fluid bed reactors. Karol et al, U.S. Patent 4,302,566, describes a gas phase, fluid bed reactor for producing linear low density polyethylene polymers. Graff, U.S. Patent 4,173,547, Stevens et al, U.S. Patent 3,787,384, Strobel et al, U.S. Patent 4,148,754 and Ziegler, deceased, et al, U.S. Patent 4,063,009, describe various polymerization processes which produce polyethylene other than linear low density polyethylene.

Nowlin et al, U.S. Patent 4,481,301 teaches the preparation of a highly active alpha-olefin polymerization catalyst comprising contacting a support material, e.g., silica, containing reactive OH groups with a stoichiometric excess of an organomagnesium composition, and subsequently reacting the product with a tetravalent titanium compound.

Bobst et al, U.S. Patent 4,372,758, discloses a process for removing unpolymerized monomers from olefin polymers, comprising introducing an inert gas into a purge vessel countercurrently to the flow of the product also introduced into the purge vessel. The unreacted hydrocarbon monomers are stripped from the product in the purge vessel, a vent gas containing the monomers is recovered from the purge vessel, a portion of the vent gas is burned in a flare, and the remainder thereof is recycled to the purge vessel as a conveying stream for the polymer or as a purge stream.

As is known to those skilled in the art, heretofore-known gas phase, fluid bed reactor processes for polymerizing alpha-olefins, and especially processes producing linear low density polyethylene polymers, were relatively inefficient because a substantial portion of monomers was not converted to the products and represented lost reactants. There were two principal mechanisms responsible for the loss of alpha-olefins in such a process: (A) reactor gas vented with the polymer in the product discharge system, and (B) unreacted alpha-olefin reactant gas dissolved in the product and carried with it from the reactor downstream into the system. Reactor gases lost by both of these mechanisms were usually removed from the system through a purge bin flare vent. Unreacted monomers usually comprised about 2-8% of the total monomers fed to the reactor.

In previously used gas phase, fluid bed reactor processes, the monomer or monomers were conducted to a fluid bed reactor, normally operating at a pressure of about 2200 kPa gauge (300 psig). Simultaneously, but independently of the monomers feed, an olefin polymerization catalyst was also conducted into the fluid bed reactor. The partial pressure of the ethylene monomer in such a gas phase fluid bed reactor was required to be at least 690 kPa (100 psi). At such a relatively high ethylene partial pressure, the losses of the ethylene and hexene, when hexene was used as the comonomer, were substantial as is exemplified in Table 1 below.

## TABLE 1

### Commercial Ziegler–Natta Ethylene Polymerization Catalyst, 690 kPa (100 psi) $C_2^=$ Partial Pressure (g loss/g of product)

|                             | Ethylene | Hexene |
|-----------------------------|----------|--------|
| Discharge System Vent Loss  | 0.0082   | 0.0043 |
| Dissolved Loss              | 0.0024   | 0.0408 |
| Total Loss                  | 0.0106   | 0.0451 |

As shown in Table 1, the hexene comonomer dissolved in the product represents the largest loss from the process. Vent losses are smaller but are also significant. Assuming the raw materials cost to be 52.9 cents/kg (24 cents/pound) of ethylene and 88.1 cents/kg (40 cents/pound) of hexene, the total cost for unreacted monomers lost is estimated to be about 4.63 cents/kg (2.1 cents per pound) of the product.

With the recently-developed alpha-olefin polymerization catalysts, the partial pressure of olefin monomer, such as ethylene, in the reactor was usually maintained at about 140 to 550 kPa (20 to 80 psi). Since the preferred minimum operating pressure in the gas phase, fluid bed reactor of this type is about 2070 kPa gauge (300 psig), an inert gas, such as nitrogen, had to be added to the reactor to compensate for the lower ethylene partial pressure. The polymerized product was discharged from the reactor and conducted to a product discharge system, typically comprised of two vessels in series, and then conveyed to a product purge vessel for removal of unreacted hydrocarbons. In the product purge vessel, the unreacted hydrocarbon reactants were removed by passing the product countercurrently to the flow of an inert purge gas, such as nitrogen, and recovering a vent gas containing the unreacted reactants. The vent gas was normally burned in a flare unit.

With such new-generation alpha-olefin polymerization catalysts, which enable the operation of the fluidized bed reactor at partial pressures of ethylene of about 138 to 552 kPa (20-80 psi), the reactant gas losses are reduced, as shown below in Table 2.

## TABLE 2

### Reactant Gas Losses at Low $C_2^=$ Partial Pressure

### (g loss/g of product)

|  | Ethylene | Hexene |
|---|---|---|
| Process operating at 410 kPa (60 psi) $C_2^=$ | 0.0064 | 0.0261 |
| Process operating at 170 kPa (25 psi) $C_2^=$ | 0.0027 | 0.0080 |

Based on the above data, potential raw material savings are 1.9 cents/kg (0.86 cents/pound) for the process operating at 410 kPa (60 psi) partial pressure of ethylene and 3.7 cents/kg (1.68 cents/pound) for a process operating at 170 kPa (25 psi) partial pressure of ethylene, as compared to the process of Table 1.

Although the advent of gas phase, fluid bed reactor processes for polymerization of alpha-olefins, such as that described by Nowlin et al, decreased the losses of the unreacted monomers because lower partial pressures of the reactants are sufficient in the fluidized bed reactor, such losses are still considerable and add substantially to the cost of the polymer products produced in the process.

This invention provides a fluidized bed vapor phase process for polymerizing at least one $C_2$ to $C_{10}$ olefin comprising:

(a) polymerizing the olefin in a fluidized bed reactor means;

(b) recovering the polymerized olefin product from the fluidized bed reactor means into a product vessel means;

(c) conveying the product from the product vessel means to a blow tank means;

(d) conveying the product from the blow tank means to a purge vessel means to separate unreacted olefin from the product;

(e) introducing an inert purge gas into the purge vessel means; and

(f) removing a vent gas from the purge vessel means; characterized in that the vent gas, without concentration or purification treatment thereof, is recycled to the fluidized bed reactor means.

A fluidized bed, gas phase process for polymerizing $C_2$-$C_{10}$ alpha-olefins, wherein an inert gas is used to remove unreacted alpha-olefin reactants from the product, is improved by eliminating a stream of nitrogen make-up feed to the gas phase fluid bed reactor, and by substituting therefor a recycle stream from the product purge vessel. The recycle stream is obtained from the vent gas which is recovered from the product purge vessel, also referred to herein as the purge vessel. The recycle stream is conducted from the purge vessel to a compressor and subsequently recycled to the fluid bed vessel.

In an alternative embodiment, a portion of the purge vessel vent gas is conducted to one of the two tanks of the product recovery system to serve as a boost flow gas for helping convey the polymer product to the purge vessel.

Figure 1 is a schematic flow chart of a prior art process for low pressure, gas phase, fluid bed, alpha-olefin polymerization reaction.

Figure 2 is a schematic flow chart of a process for low pressure, gas phase, fluid bed alpha-olefin polymerization reaction of the present invention.

The present invention can be used in conjunction with a process for polymerization or copolymerization of any $C_2$-$C_{10}$ alpha-olefins. However, in the preferred embodiments, the invention is directed to the polymerization of ethylene, or copolymerization of ethylene with higher $C_3$-$C_{10}$ alpha-olefins, and the polymerization of propylene. Although, for purposes of illustration and simplification, the invention will be described below with reference to the production of low pressure, low density ethylene copolymers prepared by polymerizing ethylene and 1-hexene, it will be apparent to those skilled in the art that the process of the present invention is not limited thereto, and that it can be used in all of the olefin polymerization reactions identified above.

As used herein, and in the appended claims, the term "low pressure, low density ethylene copolymers" is used to designate copolymers containing at least about 80% by weight of ethylene units and not more than about 20% by weight of at least one $C_3$-$C_{10}$, preferably $C_3$-$C_8$, alpha-olefin hydrocarbon comonomer, such as propylene, 1-butene, 1-hexene, 4-methyl 1-pentene and 1-octene, which are copolymerized at relatively low total reactor pressures of about 690 to 2410 kPa gauge (100-350 psig) and at relatively low monomer partial pressures of about 170-1040 kPa abs (25-150 psia). Such copolymers have the density of not greater than about 0.94 g/cc, and preferably their density is in the range of about 0.91 to about 0.94 g/cc.

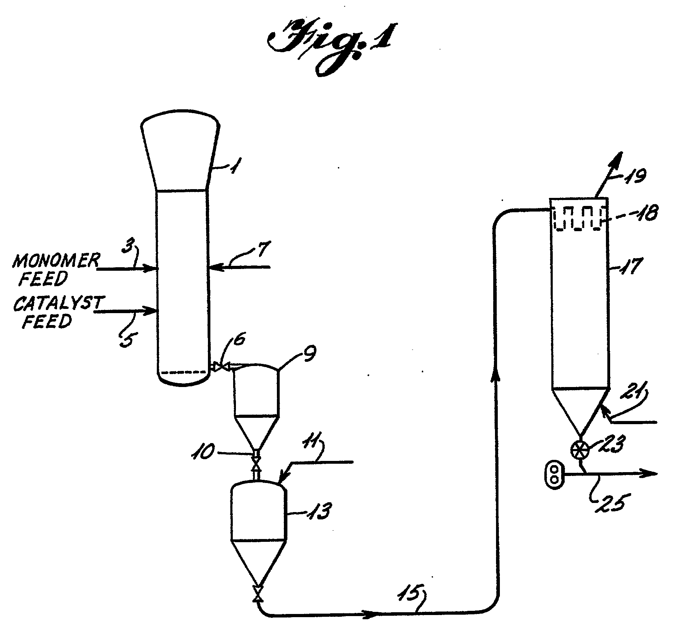

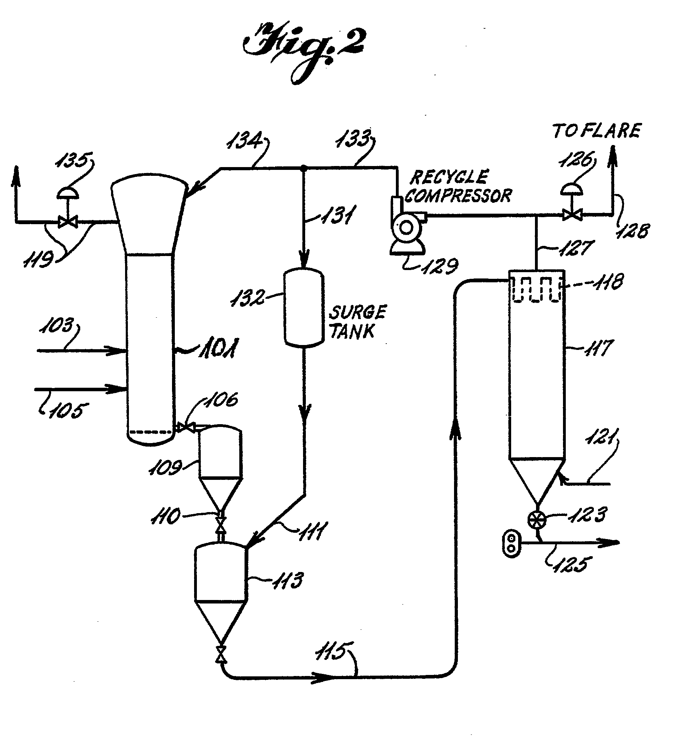

The crucial features of the invention can best be described by contrasting the operation of a prior art gas phase, fluidized bed polymerization process of Figure 1 with the present invention, schematically illustrated in Figure 2.

Figure 1 is a schematic representation of a typical prior art fluidized bed polymerization process for polymerizing linear low density polyethylene from ethylene and 1-hexene wherein nitrogen is used as a purge gas in a purge vessel means, and the vent gas recovered from the purge vessel means is burned in a flare. With reference to Figure 1, a fluid bed reactor 1 is operated at about 2070 kPa gauge (300 psig) total pressure. Monomer feed is introduced into the reactor through a conduit 3 and a particulate catalyst feed through a conduit 5. Typical monomer feed is comprised of ethylene and 1-hexene, both of which may be introduced through the conduit 3, or, alternatively, ethylene could be introduced into the reactor through a conduit 3 and 1-hexene through a separate conduit, not shown in Figure 1. Nitrogen make-up feed is introduced into the reactor through a conduit 7 to control the ethylene partial pressure within the reactor. At a constant total reactor pressure, a high rate of nitrogen feed increases the nitrogen partial pressure in the reactor and lowers the ethylene partial pressure.

After the monomers are copolymerized in the reactor, the polymer product is withdrawn from the fluid bed reactor and conducted to a two-vessel product discharge system comprised of a product chamber 9 and a product blow tank 13, arranged in series. As shown in Figure 1, the product is first conducted from the reactor 1 into the product chamber 9 through a product valve 6. The product chamber is thereafter sealed from the reactor by closing product valve 6. The product is conducted to a product blow tank 13 through a valved conduit 10. A stream of nitrogen is introduced into the product blow tank 13 through a conduit 11 to aid in conveying the product from the product discharge system into the purge bin. Thus, the product is conveyed through a line 15 to the product purge bin 17 containing conventional filters 18 in the upstream portion thereof. A stream of an inert purge gas, such as nitrogen, is introduced into the downstream portion of the purge bin through a conduit 21 to remove any unpolymerized monomers from the product and from the system. Such unpolymerized monomers, in the stream of the inert gas, are removed from the purge bin through a conduit 19 and conducted to a flare to be burned. The product polymer is removed from the purge bin through a conventional airlock device 23 and then conducted to conventional storage facilities through a conduit 25. When the process of Figure 1 is used to polymerize ethylene with 1-hexene to produce a copolymer having a density of 0.918 g/cc, a substantial amount of 1-hexene, highly soluble in such a low density polyethylene, is removed from this system through the conduit 19 and burned, and it therefore represents "wasted" monomer, as discussed above.

In accordance with the present invention, described in detail below, the vent gas from the purge bin vessel, instead of being conducted to a flare and burned, is recirculated to the fluidized gas phase reactor, thereby providing a substitute for the inert gas fed into the reactor in prior art systems to maintain the monomer concentration, such as ethylene, at the required level. In addition, the vent gas recirculated to the fluidized gas phase reactor also contains a significant amount of reactant gases which are polymerized in the presence of the catalyst.

For purposes of illustration, the invention will be described in conjunction with one exemplary embodiment thereof, schematically illustrated in Figure 2. In reference to Figure 2, the process is conducted in substantially the same manner as that of Figure 1, described in detail above, except for the modifications imparted thereto by the present invention. The description of the exemplary embodiment of the process illustrated in Figure 2 is based on the following assumptions: a low pressure polymerization of ethylene and 1-hexene is conducted to produce a copolymer having a density of 0.918 g/cc, and a melt index of 2 g/10 min.; the catalyst of Nowlin et al is used with triethylaluminum as a co-catalyst; and nitrogen is used as an inert purge gas in the purge bin. Ethylene alone, or together with 1-hexene, is introduced into fluid bed reactor 101 through a conduit 103. The polymerization catalyst is introduced into the reactor 101 through a conduit 105. The reactor 101 is operated at a total reactor pressure of about 2070 kPa gauge (300 psig), the temperature of about 88°C and at a fluidization gas speed of about 61 cm/sec (2 ft./sec). The polymerized product is removed from the reactor and conducted to a two-tank product discharge system comprised of the product chamber 109 and the product blow tank 113. Subsequently, the product is conducted to a purge bin vessel 117, and recovered therefrom through an air-lock device 123 and a conduit 125. An inert purge gas, such as nitrogen ($N_2$), is introduced into the purge bin vessel at the rate of about 0.02 kg (pounds) of $N_2$ per kg (pound) of polymer, through a conduit 121 to remove any unreacted monomers. In contrast to the prior art process, described above in connection with Figure 1, the vent gas from the purge bin, having a pressure of about 7 to 14 kPa gauge (1 to 2 psig), is removed through a conduit 127, conducted to a compressor 129, wherein it is compressed to a pressure of about 2420 to 3110 kPa gauge (350 to about 450 psig), and returned to the reactor. After leaving the recycle compressor, the gas is conducted through a conduit 133 to the reactor 101. The reactor 101 is equipped with a vent gas conduit 119, containing a valve 135 which conducts excess gases to a flare, wherein they are burned.

In an optional embodiment, the process of Figure 2 can be equipped with an auxiliary vent system comprising a control valve 126 and an auxiliary vent gas conduit 128. If desired, all or a portion of the purge bin vent gas from the conduit 127 can be passed through the auxiliary vent system and the remainder, if any, to the recycle compressor 129. The auxiliary vent system provides operational flexibility to accommodate reactor start-up or other situations wherein the full recycle of the purge bin vent gas to the reactor is undesirable.

In the preferred embodiment, the valve 126 is closed and only a portion of the purge bin gas vent, recovered through a conduit 127, is recycled to the reactor, while the remainder thereof is used as a boost flow stream to help in conducting the product from the product blow tank to the purge bin vent vessel. In this embodiment, 20% to 80% by volume, preferably 30% to 50% by volume of the total gas stream removed from the purge bin through the conduit 127 is conducted through a conduit 134 to the reactor 101, while the remainder of the gas, that is, 20% to 80% by volume, preferably 50% to 70% by volume, is conducted to a surge tank 132 through a conduit 131, and is subsequently used as a boost flow gas introduced into the product blow tank means 113 through a conduit 111.

In another alternative embodiment, not shown in Figure 2, a condenser may be incorporated into the process downstream of the recycle compressor. For example, the condenser may be incorporated in conduits 131, 133 or 134, or in the vent conduit 119, between the reactor 101 and the control valve 135. The condenser would preferentially condense heavy hydrocarbons, such as 1-hexene, from the gas stream. The condensed hydrocarbons would then be recycled to the reactor. If the condenser is placed in the conduits 131, 133 or 134, the lighter, uncondensed components would be partially used as the recycle gas introduced into the reactor to eliminate the nitrogen make-up feed of prior art, and partially conducted to a separate vent system, also not shown in Figure 2, to replace, at least to some extent, the flow through the vent conduit 119. If the condenser is incorporated into the conduit 119, all of the lighter, uncondensed components would be conducted to the existing vent system, shown in Figure 2, e.g., through the control valve 135. In such an alternative embodiment, the overall recovery of heavy hydrocarbons, such as 1-hexene, is improved.

By eliminating the nitrogen boost flow, necessary in the prior art processes (see Figure 1), the nitrogen concentration in the purge bin vent gas (removed through the conduit 127 in Figure 2) is reduced and the reactant gas concentration is increased. Thus, for a given rate of inert gas recycle, required to maintain the desired level of ethylene partial pressure in the fluid gas phase reactor, higher reactant gas concentration in the recycle allows a greater amount of recovery of reactant gases to the reactor.

An outlet from the reaction system to the flare is required to control the concentration of the inert material in the process. Thus, the process of the present invention (e.g., Figure 2) is provided with a reactor vent conduit 119 to satisfy that requirement. At steady state conditions, the total rate of flow of inert ingredients in the vent gas must equal the total rate of inert ingredients introduced into the system. Although the vent flow may be taken from any point in the system, it is preferably taken from the point of maximum concentration of inert materials (and thus minimum concentration of reactant gases) in the system. The point of maximum concentration of inert materials occurs in the reactor, and therefore, in the preferred embodiment (illustrated in Figure 2) the reactor 101 is provided with a vent conduit 119 and a control valve 135. As used herein, and in the appended claims, the term "inert materials" designates all materials present in the process of the invention which do not undergo chemical reaction under the conditions of polymerization existing in the reactor 101. Such materials include, for the process of polymerizing ethylene and 1-hexene, nitrogen, ethane, hexane, and isopentane. Conversely, the term "reactant materials", as used herein and in the appended claims, designates materials which undergo chemical reaction or play a part in the reaction under the polymerization conditions of the reactor 101. Such materials include ethylene, 1-hexene, any other olefins which may be present in the system and hydrogen. Reactant materials also include catalyst modifiers and activators, such as triethylaluminum, triisobutylaluminum and oxygen.

The gas withdrawn through a vent conduit 119, subsequently conducted to a flare and burned, comprises about 7 to about 45%, preferably about 10 to about 35%, and most preferably about 16 to about 25% by volume of ethylene, about 0.3 to about 6%, preferably about 1 to about 5%, and most preferably about 1 to about 3.5% by volume of 1-hexene, with the remainder being hydrogen and inert gases.

The vent gas, withdrawn from the purge bin vessel through the conduit 127 comprises about 50 to about 65% by volume of the inert materials, and about 35 to about 50% by volume of the reactants. In contrast, in prior art processes, such as that illustrated in Figure 1, the purge bin vent gas (removed through the conduit 19 in Figure 1 and burned in a flare) comprised about 70-80% by volume of the inert materials and about 20 to about 30% by volume of the reactants when the process of prior art illustrated in Figure 1 was used for producing identical copolymers of ethylene and 1-hexene as those produced in the process of Figure 2. For the process illustrated in Figure 2, calculated raw material losses are summarized in Table 3.

TABLE 3

Reactant Gas Losses with Vent Recycle

(g loss/g of product)

| | Ethylene | Hexene |
|---|---|---|
| Process operating at 410 kPa (60 psi) $C_2^=$ | 0.0066 | 0.0032 |
| Process operating at 170 kPa (25 psi) $C_2^{\equiv}$ | 0.0011 | 0.0004 |

The savings in raw materials costs obtained by recycling the purge bin vent gases to the reactor can be seen by comparing the data of Tables 2 and 3. The net reduction in raw material losses, obtained from that comparison, is summarized in Table 4.

TABLE 4

Loss Reduction with Vent Recycle

(g loss/g of product)

| | Ethylene | Hexene |
|---|---|---|
| Process operating at 410 kPa (60 psi) $C_2^=$ | (-0.0002) | 0.0229 |
| Process operating at 170 kPa (25 psi) $C_2^{\equiv}$ | 0.0016 | 0.0076 |

The data in Table 4 show that, assuming raw materials cost of 53 cents/kg (24 cents/pound) of ethylene and 88 cents/kg (40 cents/pound) of 1-hexene, the vent recycle system of the present invention represents cost savings of 2 cents/kg (0.91 cents/pound) for a catalyst enabling the polymerization process to be conducted at the ethylene partial pressure of 410 kPa (60 psi) and 0.75 cents/kg (0.34 cents/pound) for the catalyst enabling the process to operate at 170 kPa (25 psi) partial pressure of ethylene.

It will be apparent to those skilled in the art that the vent recycle system of the present invention is most effective and economical when it is used in combination with high activity olefin polymerization catalysts enabling the process to be operated at low ethylene partial pressures of not greater than about 550 kPa (80 psi). Such catalysts are disclosed, for example, by Karol et al, U.S. Patent 4,302,566. In the most preferred embodiment, the catalyst used herein, which enables the operation of the process at extremely low pressures of about 140 to 280 kPa (20 - 40 psi) of ethylene partial pressures, is that described by Nowlin et al, U.S. Patent 4,481,301.

Conventional materials handling equipment and techniques may be employed in the process of the present invention. It is preferred, however, to use a purge vessel which has a conical-shape bottom as shown schematically in Figure 2. In this case, in order to obtain the preferred plug flow of resin, it may be necessary to utilize an inverted conical insert or other means inside the bottom of the purge vessel. The height of this insert may be adjusted in order to provide the desired effect. Such inserts are commercially available. The purpose of the filters (118 in Figure 2) is to prevent the resin particles from being carried out of the top of the purge vessel with the exiting purge gas. Conventional, commercially-available bag filters may be employed. Similarly, conventional coolers and blowers may be employed to provide the necessary materials handling capability and to control the temperature and pressure of resin and purge gas.

The temperature of the resin in the purge vessel is not critical and is normally dependent upon the temperature at which it is obtained from the polymerization reaction. However, the resin temperature affects the residence times as discussed below. In the case of linear, low pressure, low density ethylene copolymers (LLDPE), the resin may be obtained in the form of solid particles directly from the polymerization reaction at a temperature of about 80°-90°C. It is economically desirable not to add additional heat to the resin before feeding the same to the purge vessel. It is also necessary to maintain the resin temperature lower than its softening or melting point which in the case of the LLDPE copolymers is about 100°-110°C. The higher the temperature in the purge vessel, the higher the rate of diffusion of the monomer gases from the solid polymer particles to the purge gas. However, economic considerations may prevent additional heat from being added to the resins. Satisfactory results can be obtained by directly feeding the resin at its reaction temperature to the purging operation, even considering the fact that its temperature may decrease or increase slightly due to the temperature of the conveying gas.

The inert purge gas is preferably fed to the bottom of the purge vessel at ambient temperature although any temperature up to about the temperature of the resin is acceptable. It is also preferred to provide a low positive pressure in the purge vessel since the rate of gaseous monomer diffusion is higher at lower pressures. It is however also preferred to maintain a positive pressure in the purge vessel and to avoid a vacuum since any vacuum may have the effect of drawing into the system air or oxygen which might create safety problems in view of the explosive nature of the hydrocarbon monomers at higher concentrations. Although the proper pressure depends on many factors, those skilled in the art are capable of making that determination using known mass transfer techniques. In the case of the LLDPE copolymers, the pressure of the purge gas fed to the bottom of the purge vessel is preferably about 7 kPa gauge (1 psig), although it may be as high as 100 kPa gauge (15 psig) or greater.

It is preferable to provide as uniform a flow of purge gas through the purge vessel as possible. To achieve a uniform purge gas flow, it may be necessary to provide a plurality of uniformly-spaced openings or other flow distribution devices in the bottom of the purge vessel for feeding the purge gas. For purposes of the present invention, it is preferred to feed the purge gas into the purge vessel at a rate of at least about 30.5 linear cm (1 linear foot) per minute.

The rate of flow of resin through the purge vessel is not critical and depends upon the minimum residence time necessary to reduce the concentration of gaseous monomers in the resin to the desired level. It is preferred to reduce the hydrocarbon monomer gas content in the resin to below about 25-50 parts per million by weight, although the extent to which the hydrocarbon monomer concentration must be reduced depends upon both environmental and safety requirements. In any event, the purging process is effective to substantially reduce the hydrocarbon monomer gas content of the LLDPE copolymer resins.

The inert purge gas employed in the practice of the present invention may be any gas which is inert both to the resin being purged and the particular gaseous monomers being removed. The preferred purge gas is nitrogen, although other gases, such as helium may be employed. In the preferred embodiment, the nitrogen content of the purge gas is at least about 90% and oxygen is substantially excluded from the purge gas. The maximum permissible oxygen content varies depending upon the particular hydrocarbon monomer gas being stripped. As the concentration of hydrocarbons increases in the presence of oxygen, the danger of explosion also increases, and this level varies with different hydrocarbons. Those skilled in the art can easily determine the tolerable oxygen levels for a particular monomer. Of course, the inert purge gas may also include small amounts of the gaseous monomers although as their concentration increases, their diffusion rate and hence the resin residence time will be affected as discussed above. Other advantages of employing relatively pure nitrogen as a purge gas are that more hydrocarbon gases can be stripped from the resin particles and any pure nitrogen that may be discharged with the exiting resins does not contribute to atmospheric emissions as would gases containing impurities.

## Claims

1. A fluidized bed vapor phase process for polymerizing at least one $C_2$ to $C_{10}$ olefin comprising:
   (a) polymerizing the olefin in a fluidized bed reactor means;
   (b) recovering the polymerized olefin product from the fluidized bed reactor means into a product vessel means;
   (c) conveying the product from the product vessel means to a blow tank means;

(d) conveying the product from the blow tank means to a purge vessel means to separate unreacted olefin from the product;

(e) introducing an inert purge gas into the purge vessel means; and

(f) removing a vent gas from the purge vessel means; characterized in that the vent gas, without concentration or purification treatment thereof, is recycled to the fluidized bed reactor means.

2. A process of claim 1 wherein the vent gas recycled to the fluidized bed reactor means, after its removal from the purge vessel means, is separated into a first gas stream which is fed to the fluidized bed reactor means, and a second gas stream which is fed to the blow tank means, downstream of the fluidized bed reactor means.

3. A process of claim 2 wherein the first gas stream comprises 20% to 80% by volume of the vent gas removed from the purge vessel means.

4. A process of claim 1, 2 or 3 wherein a reactor vent gas stream is removed from the fluidized bed reactor means.

5. A process of claim 1, 2, 3 or 4 wherein the pressure of the vent gas from the purge vessel means is increased to 2420 to 3110 kPa gauge (350 to about 450 psig), after the vent gas is removed from the purge vessel means.

6. A process of claim 1, 2, 3, 4 or 5 wherein the inert purge gas is nitrogen or helium.

7. A process of claim 2, 3, 4, 5 or 6 wherein the second gas stream is conducted to a surge tank means, upstream of its point of introduction into the blow tank means.

8. A process of claim 1, 2, 3, 4, 5, 6 or 7 wherein a linear low density copolymer of ethylene with one or more $C_3$-$C_{10}$ alpha-olefins is produced.

9. A process of claim 8 wherein the $C_3$-$C_{10}$ olefin is 1-hexene.

10. A process of claim 4, 5, 6, 7, 8 or 9 wherein the reactor vent gas removed from the fluidized bed reactor means comprises about 7% to 45% by volume of ethylene and about 0.3% to 6.0% by volume of 1-hexene.

11. A process of claim 2 wherein a portion of the vent gas is removed from the process through an auxiliary vent system and the remainder thereof is separated into the first gas stream and the second gas stream.

**Patentansprüche**

1. Fließbettgasphasenverfahren zur Polymerisierung wenigstens eines $C_2$- bis $C_{10}$-Olefins, das

(a) die Polymerisierung des Olefins in einem Fließbettreaktor,

(b) das Sammeln des polymerisierten Olefinprodukts aus dem Fließbettreaktor in einem Produktbehälter,

(c) die Überführung des Produkts aus dem Produktbehälter in einen Blasetank,

(d) die Überführung des Produkts aus dem Blasetank in einen Reinigungsbehälter, um nicht umgesetztes Olefin von dem Produkt abzutrennen,

(e) die Einleitung eines inerten Reinigungsgases in den Reinigungsbehälter, und

(f) die Entfernung eines Abgases aus dem Reinigungsbehälter, umfaßt, dadurch gekennzeichnet, daß das Abgas ohne Konzentrierungs- oder Reinigungsbehandlung in den Fließbettreaktor rückgeführt wird.

2. Verfahren nach Anspruch 1, worin das Abgas, das in den Fließbettreaktor rückgeführt wird, nach seiner Entfernung aus dem Reinigungsbehälter in einen ersten Gasstrom, der in den Fließbettreaktor eingespeist wird, und in einen zweiten Gasstrom, der in einen stromabwärts des Fließbettreaktors angeordneten Blasetank eingespeist wird, aufgetrennt wird.

3. Verfahren nach Anspruch 2, worin der erste Gasstrom 20 bis 80 Vol.-% des aus dem Reinigungsbehälter entfernten Abgases enthält.

4. Verfahren nach Anspruch 1, 2 oder 3, worin ein Reaktorabgasstrom aus dem Fließbettreaktor entfernt wird.

5. Verfahren nach Anspruch 1, 2, 3 oder 4, worin der Druck des Abgases aus dem Reinigungsbehälter auf 2420 bis 3110 kPa (350 bis etwa 450 psig) erhöht wird, nachdem das Abgas aus dem Reinigungsbehälter entfernt worden ist.

6. Verfahren nach Anspruch 1, 2, 3, 4 oder 5, worin das inerte Reinigungsgas Stickstoff oder Helium ist.

7. Verfahren nach Anspruch 2, 3, 4, 5 oder 6, worin der zweite Gasstrom in einen Zwischentank geführt wird, der stromaufwärts seines Einleitungspunktes in den Blasetank liegt.

8. Verfahren nach Anspruch 1, 2, 3, 4, 5, 6 oder 7, worin ein lineares Copolymer niedriger Dichte aus Ethylen und einem oder mehreren $C_3$- bis $C_{10}$-$\alpha$-Olefinen hergestellt wird.

9. Verfahren nach Anspruch 8, worin das $C_3$- bis $C_{10}$-Olefin 1-Hexen ist.

10. Verfahren nach Anspruch 4, 5, 6, 7, 8 oder 9, worin das Reaktorabgas, das aus dem Fließbettreaktor entfernt wird, etwa 7 bis 45 Vol.-% Ethylen und etwa 0,3 bis 6,0 Vol.-% 1-Hexen enthält.

11. Verfahren nach Anspruch 2, worin ein Teil des Abgases durch ein Hilfsablaßsystem aus dem Verfahren entfernt und der Rest davon in den ersten und zweiten Gasstrom aufgetrennt wird.

**Revendications**

1. Procédé à lit fluidisé en phase gazeuse pour polymériser au moins une oléfine en $C_2$ à $C_{10}$, comprenant:
   (a) la polymérisation de l'oléfine dans un réacteur à lit fluidisé,
   (b) la récupération du produit constitué par l'oléfine polymérisée du réacteur à lit fluidisé dans un récipient de produit,
   (c) le transport du produit depuis le récipient de produit dans un réservoir de vidange,
   (d) le transport du produit depuis le réservoir de vidange dans un récipient de purge pour séparer l'oléfine qui n'a pas réagi du produit,
   (e) l'introduction d'un gaz inerte de purge dans le récipient de purge; et
   (f) le retrait d'un gaz d'évent du récipient de purge,
caractérisé en ce que le gaz d'évent, sans subir de traitement de concentration ou de purification, est recyclé dans le réacteur à lit fluidisé.

2. Procédé selon la revendication 1, dans lequel le gaz d'évent recyclé dans le réacteur à lit fluidisé, après son retrait du récipient de purge, est séparé en un premier courant gazeux qui est introduit dans le réacteur à lit fluidisé, et en un second courant gazeux qui est introduit dans le réservoir de vidange, en aval du réacteur à lit fluidisé.

3. Procédé selon la revendication 2, dans lequel le premier courant gazeux constitue 20 à 80% en volume du gaz d'évent retiré du récipient de purge.

4. Procédé selon la revendication 1, 2 ou 3, dans lequel un courant de gaz d'évent de réacteur est retiré du réacteur à lit fluidisé.

5. Procédé selon la revendication 1, 2, 3 ou 4, dans lequel la pression du gaz d'évent provenant du récipient de purge est augmentée jusqu'à une valeur comprise entre 2420 et 3110 kPa manométriques (350 et 450 psig), après retrait du gaz d'évent du récipient de purge.

6. Procédé selon la revendication 1, 2, 3, 4 ou 5, dans lequel le gaz de purge inerte est l'azote ou l'hélium.

7. Procédé selon la revendication 2, 3, 4, 5 ou 6, dans lequel le second courant gazeux est introduit dans un réservoir tampon, en amont de son point d'introduction dans le réservoir de vidange.

8. Procédé selon la revendication 1, 2, 3, 4, 5, 6 ou 7, dans lequel un copolymère linéaire à basse densité de l'éthylène et d'une ou plusieurs alpha-oléfines en $C_3-C_{10}$ est produit.

9. Procédé selon la revendication 8, dans lequel l'oléfine en $C_3-C_{10}$ est l'hexène–1.

10. Procédé selon la revendication 4, 5, 6, 7, 8 ou 9, dans lequel le gaz d'évent de réacteur retiré du réacteur à lit fluidisé comprend environ 7 à 45% en volume d'éthylène et environ 0,3 à 6,0% en volume d'hexène–1.

11. Procédé selon la revendication 2, dans lequel une partie du gaz d'évent est retirée du procédé par l'intermédiaire d'un système d'évent auxiliaire et le reste de ce gaz d'évent est divisé en le premier courant gazeux et en le second courant gazeux.

# Fig.1

MONOMER
FEED

CATALYST
FEED

# Fig. 2